# EUROPEAN PATENT SPECIFICATION

(11) **EP 2 362 128 B1**
(45) Date of publication and mention of the grant of the patent: **03.04.2013**
(21) Application number: 11155073.7
(22) Date of filing: 18.02.2011
(51) Int. Cl.: F16L 21/00, F16L 25/14

(54) **Improvements in pipe coupling bushes**
Verbesserungen bei Rohrverbindungshülsen
Améliorations des douilles d'accouplements de tuyaux

(30) Priority: 18.02.2010 GB 201002762; 31.08.2010 GB 201014407
(43) Date of publication of application: 31.08.2011
(73) Proprietor: Flex-Seal Couplings Limited, Wombwell, Barnsley S73 0UW (GB)
(72) Inventor: Milnes, David, Barnsley, South Yorkshire S73 0UW (GB)
(74) Representative: Wilson Gunn

(56) References cited:
- WO-A1-2010/017824
- DE-A1- 3 830 874
- GB-A- 1 209 195

## Description

The present invention relates to improvements in, and in relation to, pipe coupling bushes and in particular to pipe coupling bushes for enabling the coupling together of pipes of multiple different sizes.

It is often necessary or desirable to couple pipe sections together. If each pipe section has the same diameter or a similar diameter, this can be readily achieved by use of a standard pipe coupling. Such a coupling typically comprises a tube of resiliently deformable material adapted to fit around the outer diameter of each pipe section and bridge the gap therebetween. Typically a cinch band can be provided around each end portion of the coupling. When tightened, the cinch band compresses the coupling against the pipe section thereby securing the coupling to the pipe section and forming a seal. Another common feature is the provision of a shear band to increase resistance to load and shear forces.

Commonly, the two pipe sections have different outer diameters. If this size difference is relatively small, the cinch bands can ensure a reasonably secure seal between the coupling and both pipe sections. If, however, this size difference is relatively large, it may not be possible to form a secure seal by further tightening the cinch bands around the smaller pipe section. In such cases, one possible solution is to provide a 'bush' around the end of the smaller pipe section. A bush comprises a strip of resilient material which may be wrapped around the outer diameter of the smaller pipe section. The thickness of the bush is sufficient to enable a coupling which fits the larger pipe section to form a secure seal on the outer surface of the bush. If the bush is tightly applied to the smaller pipe section, this will thereby enable a secure seal between the coupling and the smaller pipe section to be provided.

In use, in order to cover all likely eventualities, a plurality of different thickness bushes may be needed or bushes of various thicknesses combined together.

A contractor is thereby obliged to maintain a stock of many different bushes or risk inadequate sealing of a fitted coupling.

A known type of pipe coupling is disclosed in DE3830874 (A1), which consists of an elastomer sealing sleeve and which serves to provide a leak-tight connection between the ends of two pipes. In particular, it is suitable for pipes which are used to convey media to which the material of the elastomer sleeve is not sufficiently resistant. To obtain a resistant pipe coupling, an independent layer composed of a particularly resistant material is arranged between the outer wall of the pipe ends and the sealing sleeve. This layer is pulled onto the two pipe ends when assembling the pipe coupling, before the sealing sleeve is pushed axially over the layer or laid around the latter. The independent layer may be under elastic pre-stress, allowing the reliable sealing of the ends of the pipes with different diameters using conventional/standard sealing sleeves.

It is thus an object of the present invention to provide a bush that at least partially overcomes or alleviates the above problems.

According to a first aspect of the present invention there is provided a pipe coupling bush comprising: a first strip having a first thickness and comprising first and second contact surfaces which are suitable for making contact with the external surface of a pipe; a second strip having a second, different thickness and comprising third and fourth contact surfaces which are suitable for making contact with the external surface of a pipe; and a thin foldable hinge portion provided between the first strip and the second strip wherein the first and second strips are operable to move relative to each other about the hinge portion between at least: a first position wherein the first and third surfaces may both make contact with the external surface of a pipe; and a second position wherein the first and third surfaces are in contact with each other and either the second or fourth surface may make contact with the external surface of a pipe.

In the first position, a bush of this type can be used in situations requiring a bush of the thickness of the first strip or the thickness of the second strip. Alternatively, when disposed in the second position, a bush of this type can be used in a situation requiring a bush of the thickness of the first strip and second strip combined. Such a bush can therefore be used for enabling the coupling of a wider range of pipes than prior art bushes, reducing the necessity to stock many different sizes of bushes to ensure good sealing of a coupling.

Preferably, the bush is formed from an elastomer or other resiliently deformable material. This allows the bush to be stretched or compressed if required or desired. Suitable materials include, but are not limited to: EPDM, TPE, NBR, PVC, SBR, NR.

The first strip and second strip may comprise substantially parallel elongate strips. The first, second, third and fourth surfaces may be substantially flat, regular patterned or irregular surfaces. The foldable hinge portion may comprise a thin connecting web between the parallel first and second strips. The foldable hinge portion may be narrow relative to the first and second strips.

The first strip, second strip and hinge portion may be integrally formed. In particular, the first strip, second strip and hinge portion may be formed as a constant profile extrusion. Alternatively, the first strip, second strip and hinge portion may be formed in a suitable mould. The first strip, second strip and hinge portion each share a substantially continuous surface comprising the first and third surfaces. This can facilitate the folding of the bush about the hinge portion.

The foldable hinge portion may be of any suitable thickness. Typically, the foldable hinge portion is adapted to be of a thickness that facilitates a substantially 180° bend between the first strip and the second strip without losing structural integrity when folded. This thickness may thus depend upon the properties of the particular material from which the bush is formed. In one example, the hinge portion may be of the order of around, say, 0.5mm in thickness. The width of the hinge portion is adapted to be sufficient that a substantially 180° bend between the first strip and the second strip can be achieved. This width may thus depend upon the properties of the particular material from which the bush is formed. In one example this may be of the order of around, say, 3mm.

The ratio of the first thickness to the second thickness may be selected as any suitable ratio. In one preferred embodiment, this ratio may be of the order of around, say, 1:2. In other embodiments, other suitable ratios may be selected. Typically, the thicknesses of the first and second strips are of the orders of a few millimetres. In one example this might be a thickness of around, say, 4mm for the first strip and around, say, 8mm for the second strip.

In some embodiments, the bush may be provided in elongate linear form to be cut to a desired length. In other embodiments, the bush may be provided in an annular form. This can be achieved by moulding the bush directly into an annular form. Alternatively, this may be achieved by connecting together the two ends of an elongate bush. In such examples, the ends may be connected by any suitable means including, but not limited to: adhesives, connecting components, connecting mouldings, heat welding, chemical welding pressure welding, injection moulding or vulcanisation.

Typically, smaller bushes may be moulded and larger bushes may be formed by extrusion. This reduces costs for manufacturing larger bushes compared to the costs involved in providing dedicated oversize mould tools.

In embodiments wherein the bush is in annular form, the substantially continuous surface preferably forms the inner surface of the annulus. In such embodiments, the diameter of the annulus is preferably of the same order as the outer diameter of the pipe sections to which it may be fitted.

The bush may comprise additional strips connected via additional thin foldable hinge portions.

In particular, the bush may further comprise: a third strip having, a third thickness, and comprising fifth and sixth contact surfaces which are suitable for making contact with the external surface of a pipe, wherein the third strip is connected to the second strip via a second thin foldable hinge portion and wherein the second and third strips are operable to move relative to each other about the second hinge portion between at least: a first position wherein both one of the contact surfaces of the second strip and one of the contact surfaces of the third strip may make contact with the external surface of a pipe; and a second position wherein either the fourth and sixth surfaces are in contact with each other or the third and fifth surfaces are in contact with each other.

Preferably, the third thickness is chosen so as to be substantially different from: the first thickness, the second thickness and the combination of the first and second thicknesses. The first, second and third thicknesses may be selected as any suitable ratio. In one preferred embodiment, this ratio may be of the order of around, say, 1 :2:3. In other embodiments, other suitable ratios may be selected.

The second thin foldable hinge portion may incorporate any or all of the features of the thin foldable hinge portion as is desired and/or required.

Such a bush can therefore be used for enabling the coupling of an even wider range of pipes.

In such embodiments, the third strip and second hinge portion may be integrally formed with the first strip, second strip and hinge portion. In particular, the first strip, second strip, third strip, hinge portion and second hinge portion may be formed as a constant profile extrusion. Alternatively, the first strip, second strip, third strip, hinge portion and second hinge portion may be formed in a suitable mould.

The second strip, third strip and second hinge portion each share a substantially continuous surface. This can facilitate the folding of the bush about the second hinge portion. Said substantially continuous surface may comprise the third and fifth surfaces. Alternatively, said substantially continuous surface may comprise the fourth and sixth surfaces.

In a preferred embodiment, the substantially continuous surface shared by the first strip, second strip and hinge portion is disposed on the opposite surface of the bush to the substantially continuous surface shared by the second strip, third strip and second hinge portion.

According to a second aspect of the present invention there is provided a method of manufacturing a pipe coupling bush according to the first aspect of the present invention, the method comprising the steps of: providing an extrusion profile; extruding a resiliently deformable material through said profile; and cutting the extruded material to a required or desired length.

The method of the second aspect of the preset invention may incorporate any or all features of the first aspect of the present invention as required or as desired.

In particular, the method may incorporate the additional step of connecting the ends of the extruded material to form an annular bush. The ends may be connected by any suitable means including, but not limited to: adhesives, connecting components, connecting mouldings, heat welding, chemical welding, pressure welding, injection moulding or vulcanisation.

In order that the invention is more clearly understood it is described further below by way of example only and with reference to the accompanying drawings:
Figure 1 is a schematic view of an annular bush for a pipe coupler according to the present invention;
Figures 2a-2b are a schematic comparison of the use of a prior art bush and the bush of figure 1;
Figures 3a-3b are a schematic comparison of the use of a prior art bush and the bush of figure 1;
Figures 4a-4b are a schematic comparison of the use of a prior art bush and the bush of figure 1;
Figure 5 shows a schematic view of a further embodiment of an annular bush for a pipe coupler according to the present invention; and
Figures 6a-6c show the annular bush for a pipe coupler as shown in figure 5 disposed in three different positions which correspond to three different bush thicknesses.

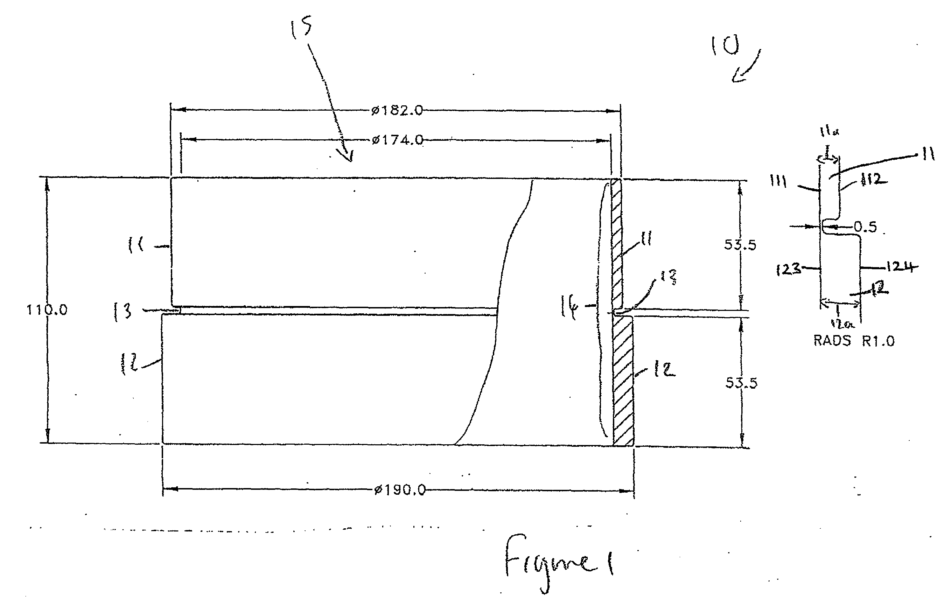

Turning now to figure 1, a bush 10 suitable for use when coupling together pipe sections of different diameters with a standard pipe coupling is shown, The bush 10 comprises a first strip 11; having a first thickness 11a and first and second contact surfaces 111, 112, and a second strip 12 having a second thickness 12a and third and fourth contact surfaces 123, 124. Between the two strips 11 and 12 is provided a thin, narrow hinge portion 13. The first strip 11, second strip 12 and hinge portion 13 each share one substantially continuous surface 14, which comprises the first and third contact surfaces 111, 123. In use, the hinge portion 13 allows the first and second strips 11, 12 to be folded together with their respective portions of surface 14, the first contact surface 111 and the second contact surface 123, being back to back. In this manner, the bush 10 can provide a compensating thickness equal to the thickness of the first strip 11, the thickness of the second strip 12 or of the combined thickness of the first and second strips 11, 12. This can allow a bush 10 of this form to compensate for a wider variety of pipe section size differences than the prior art bushes.

The bush 10 is formed from a resiliently deformable elastomer, to allow the required folding performance. Additionally, this can allow the bush 10 to stretch, compress or otherwise deform to fit and seal against a pipe section or pipe coupling. Typically, the bush 10 may be formed by extrusion or moulding. In some circumstances, the bush 10 may be provided in an elongate linear form that may be cut to a required length. In more favoured embodiments, as is shown in figure 1, the bush 10 may be provided in an annular form 15 wherein the respective ends of a desired length of bush 10 are connected together. The connection of the respective ends can be achieved by use of adhesive, additional moulding or welding, as appropriate. Alternatively, the bush 10 may be moulded in an annular form 15.

As in figure 1, this connection is preferably arranged such that the surface 14 forms the inner surface of the annulus 15. This helps to ensure a good seal against the outer surface of a pipe section.

Typically, the diameter of the annulus 15 is related to the outer diameter of a pipe section to be coupled. In view of the fact that the bush 10 is formed from resiliently deformable material, the annulus 15 inner diameter may not be directly matched to the pipe section outer diameter but may be slightly smaller or larger so long as the annulus 15 may be stretched or compressed to fit the pipe section.

In the example of figure 1, the first and second thicknesses are in a ratio of approximately 1:2. The skilled man will however appreciate that alternative ratios may be utilised if required or desired.

As discussed above, figure 1 shows a bush 10 of annular form 15. Purely as a non-limiting example, the bush of figure 1 indicates specific dimensions (a first strip thickness 11a of about 4mm, a second strip thickness 12a of about 8mm and a natural inner diameter of the annulus 15 of about 174mm). For the sake of simplicity and brevity, the further utility of the invention will be described in respect of various uses of the particular bush 10 of figure 1. The skilled man will of course appreciate that the present invention can be applied to bushes having a wide variety of different dimensions as is required or desired.

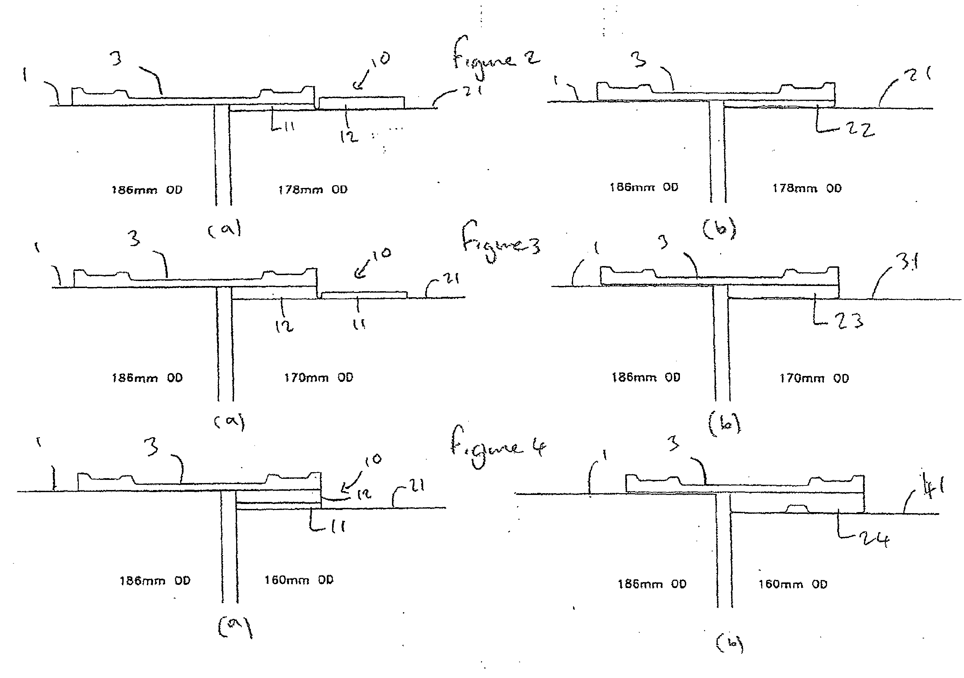

Turning now to figure 2, a pipe coupling 3 is to be used to connect a larger pipe section 1 (in the example having an outer diameter of 186mm) with a smaller pipe section 21 (in the example having an outer diameter of 178mm). In figure 2a, the connection is achieved by use of the first strip 11 of bush 10, to compensate for the size difference between pipe sections 1 and 21, this size difference corresponding to the first thickness 11a (4mm). In figure 2b, this is achieved by using a prior art bush 22 of substantially the same thickness 11 a as the first strip 11.

Turning now to figure 3, a pipe coupling 3 is to be used to connect a larger pipe section 1 (in the example having an outer diameter of 186mm) with a smaller pipe section 31 (in the example having an outer diameter of 170mm). As is apparent from figure 3, pipe section 31 has a smaller outer diameter than pipe section 21 in figure 2. In figure 3a, the connection is achieved by use of the second strip 12 of bush 10, to compensate for the size difference between pipe sections 1 and 31, this size difference corresponding to the second thickness 12a (8mm). In figure 3b, this is achieved by using a prior art bush 23 of substantially the same thickness 12a as the second strip 12.

Since the bush 10 is resiliently deformable it can adequately seal against both pipe section 21 and the smaller pipe section 31 despite the fact its natural inner diameter (174mm) does not exactly match the outer diameter of either pipe section 21 or 31 (178mm or 170mm respectively).

Turning now to figure 4, a pipe coupling 3 is to be used to connect a larger pipe section 1 (in the example having an outer diameter of 186mm) with a smaller pipe section 41 (in the example having an outer diameter of 160mm). As is apparent from figure 4, pipe section 41 has a smaller outer diameter than pipe section 21 in figure 2 or pipe section 31 in figure 3. In figure 4a, the connection is achieved by use of the bush 10 in a folded configuration. Typically, the fold is made with the first strip 11 inside the second strip 12 and enclosing substantially the whole of surface 14, this requiring the minimal level of force, The folding enables the material of both the first strip 11 and the second strip 12, to compensate for the size difference between pipe sections 1 and 31, this size difference corresponding to the combined thickness (12mm) of the first and second strips 11, 12. Additionally, the folding effectively reduces the inner diameter of the annulus 15 by an amount corresponding to the thickness 11a (4mm) of the first strip 11, further helping to adapt the bush 10 to fit the pipe section 31. In figure 4b, this is achieved by using a prior art bush 24 of substantially the same thickness as the first strip 11 and second strip 12 combined.

In the above manner, it can be seen that the bush 10 can be used in situations previously requiring three different sizes of bush 22, 23, 24. This reduces the number of different sizes of bush that need be kept in stock to deal with a range of different pipe coupling scenarios,

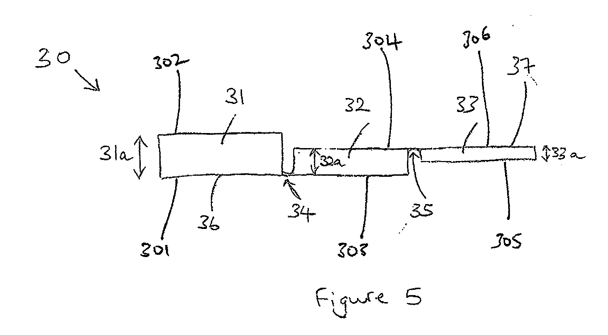

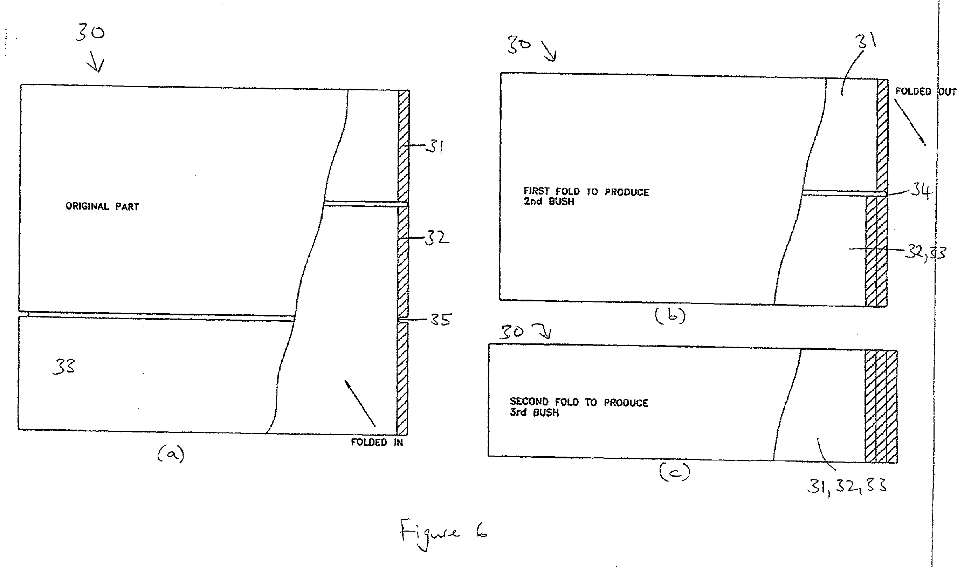

A second embodiment of the present invention will now be described with reference to figures 5 and 6. In the following description only the differences in structure and use of the first and second embodiments will be emphasised. It will of course be understood that, where appropriate, aspects of the above description of the first embodiment of the present invention will apply to the second embodiment.

Turning now to figures 5 and 6, a bush 30 suitable for use when coupling together pipe sections of different diameters with a standard pipe coupling is shown. The bush 30 comprises a first strip 31, having a first thickness 31a and first and second contact surfaces 301, 302, a second strip 32, having a second thickness 32a and third and fourth contact surfaces 303, 304, and a third strip 33, having a third thickness 33a and fifth and sixth contact surfaces 305, 306. Between the first and second strips, 31 and 32, is provided a thin, narrow hinge portion 34; and between the second and third strips, 32 and 33, is provided a second thin, narrow hinge portion 35.

The first strip 31, second strip 32 and hinge portion 34 share a first substantially continuous surface 36, comprising the first and third contact surfaces 301, 303. The second strip 32, third strip 33 and second hinge portion 35 share a second substantially continuous surface 37, comprising the fourth and sixth contact surfaces 304, 306. The first and second substantially continuous surfaces 36, 37 are arranged on opposite sides of the bush.

In use, the hinge portion 34 allows the first and second strips 31, 32 to be folded together with their respective portions of surface 36 being back to back and the second hinge portion 35 allows the second and third strips 32, 33 to be folded together with their respective portions of surface 37 being back to back.

Figure 6a shows a bush 30 in a first position wherein the bush 30 could be used for any situations requiring a bush of the thickness 31a of the first strip 31 or of the thickness 33a of the third strip 33.

As shown in figure 6b, the bush 30 can be manipulated into a folded configuration with the third strip 33 being folded back about the second hinge portion 35 to contact the second strip 32 so that he fourth contact surface 304 is in contact with the sixth contact surface 306. Such a configuration provides an arrangement which is suitable for situations requiring a bush of the combined thickness of the third and second strips 33, 32, Although not explicitly depicted in the accompanying figures, it will be obvious to one skilled in the art that the bush 30 can manipulated into a folded configuration with the first strip 31 being folded back about the hinge portion 34 to contact the second strip 32 so that he first contact surface 301 is in contact with the third contact surface 303. Such a configuration provides an arrangement which is suitable for situations requiring a bush of the combined thickness of the first and second strips 31, 32.

Furthermore, as shown in figure 6c, the bush 30 can manipulated into a folded configuration wherein the first strip 31 being folded back about the hinge portion 34 to contact the one contact surface of the second strip 32 and the third strip 33 is folded back about the second hinge portion 35 to contact the other contact surface of the second strip 32. Such a configuration provides an arrangement which is suitable for situations requiring a bush of the combined thickness of the first, second and third strips 31, 2, 33.

In this manner, the bush 30 can provide a compensating thickness equal to: the thickness of the first strip 31; the thickness of the third strip 33; the combined thickness of the first and second strips 31, 32; the combined thickness of the second and third strips 32, 33; or the combined thickness of the first, second and third strips 31, 32, 33. This can allow a bush 30 of this form to compensate for a wider variety of pipe section size differences than the prior art bushes. In particular, it can be seen that the bush 30 can be used in situations previously requiring five different sizes of bush.

The bush 30 is formed from a resiliently deformable elastomer, to allow the required folding performance and may typically be formed by extrusion or moulding. In some circumstances, the bush 30 may be provided in an elongate linear form that may be cut to a required length. Alternatively, the bush 30 may be provided in an annular form wherein the respective ends of a desired length of bush 30 are connected together. The connection of the respective ends can be achieved by use of adhesive, additional moulding or welding, as appropriate. Alternatively, the bush 30 may be moulded in an annular form.

As will be obvious to one of ordinary skill in the art, the thicknesses of the first, second and third strips 31, 32, 33 and the ratios of these thicknesses may take any values as is desired and/or required.

It is of course to be understood that the invention is not to be restricted to the details of the above embodiments which are described by way of example only.

## Claims

1. A pipe coupling bush (10, 30) comprising: a first strip (11, 31) having a first thickness (11a, 31a) and comprising first (111, 301) and second (112, 302) contact surfaces which are suitable for making contact with the external surface of a pipe; a second strip (12, 32) having a second, different thickness (12a, 32a) and comprising third (123, 303) and fourth (124, 304) contact surfaces which are suitable for making contact with the external surface of a pipe; and a thin foldable hinge portion (13, 34) provided between the first strip (11, 31) and the second strip (12, 32) wherein the first (11, 31) and second strips (12, 32) are operable to move relative to each other about the hinge portion (13, 34) between at least: a first position wherein the first (111, 301) and third (123, 303) surfaces may both make contact with the external surface of a pipe; and a second position wherein the first (111, 301) and third (123, 303) surfaces are in contact with each other and either the second (112, 302) or fourth (124, 304) surface may make contact with the external surface of a pipe.

2. A pipe coupling bush (10, 30) as claimed in claim 1 wherein the bush (10, 30) is formed from an elastomer or other resiliently deformable material.

3. A pipe coupling bush (10, 30) as claimed in claim 1 or claim 2 wherein the first (111, 301), second (112, 302), third (123, 303) and fourth (124, 304) surfaces are substantially flat, regular patterned or irregular surfaces.

4. A pipe coupling bush (10, 30) as claimed in any preceding claim wherein the foldable hinge portion (13, 34) comprises a thin connecting web between the first (11, 31) and second (12, 32) strips which is narrow relative to the first (11, 31) and second (12, 32) strips.

5. A pipe coupling bush (10, 30) as claimed in any preceding claim wherein the first strip (11, 31), second strip (12, 32) and hinge portion (13, 34) are integrally formed and wherein the first strip (11, 31), second strip (12, 32) and hinge portion (13, 34) are formed either: as a constant profile extrusion; or in a suitable mould.

6. A pipe coupling bush (10, 30) as claimed in any preceding claim wherein the first strip (11, 31), second strip (12, 32) and hinge portion (13, 34) each share a substantially continuous surface (14, 36) comprising the first (111, 301) and third (123, 303) surfaces.

7. A pipe coupling bush (10, 30) as claimed in any preceding claim wherein the foldable hinge portion (13, 34) is adapted to be of a thickness that facilitates a substantially 180° bend between the first strip (11, 31) and the second strip (12, 32) without losing structural integrity when folded.

8. A pipe coupling bush (10, 30) as claimed in any preceding claim wherein the ratio of the first thickness (11a, 31a) to the second thickness (12a, 32a) is of the order of around 1:2.

9. A pipe coupling bush (10, 30) as claimed in any preceding claim wherein the bush (10,30) is provided in elongate linear form to be cut to a desired length.

10. A pipe coupling bush (10, 30) as claimed in any preceding claim wherein the bush (10, 30) is provided in an annular form and wherein either: the bush (10, 30) is moulded directly into the annular form; or the two ends of an elongate linear bush are connected together to provide the annular form by any one or more of: adhesives, connecting components, connecting mouldings, heat welding, chemical welding, pressure welding, injection moulding or vulcanisation.

11. A pipe coupling bush (10, 30) as claimed in claim 10, when dependent directly or indirectly upon claim 6, wherein the substantially continuous surface (14, 36) forms the inner surface of the annulus.

12. A pipe coupling bush (10, 30) as claimed in any preceding claim wherein the bush comprises additional strips connected via additional thin foldable hinge portions.

13. A pipe coupling bush (30) as claimed in claim 12 wherein the bush (30) further comprises: a third strip (33) having, a third thickness (33a) and comprising fifth (305) and sixth (306) contact surfaces which are suitable for making contact with the external surface of a pipe, wherein the third strip (33) is connected to the second strip (32) via a second thin foldable hinge portion (35) and wherein the second (32) and third (33) strips are operable to move relative to each other about the second hinge portion (35) between at least: a first position wherein both one of the contact surfaces of the second strip (32) and one of the contact surfaces of the third strip (33) may make contact with the external surface of a pipe; and a second position wherein either the fourth (304) and sixth (306) surfaces are in contact with each other or the third (303) and fifth (305) surfaces are in contact with each other.

14. A pipe coupling bush (30) as claimed in claim 13 wherein the third thickness (33a) is substantially different from: the first thickness (31a), the second thickness (32a) and the sum of the first and second thicknesses.

15. A pipe coupling bush (30) as claimed in claim 13 or claim 14 wherein the third strip (33) and second hinge portion (35) are integrally formed with the first strip (31), second strip (32) and hinge portion (34) and wherein the first strip (31), second strip (32), third strip (33), hinge portion (34) and second hinge portion (35) are formed either: as a constant profile extrusion; or in a suitable mould.

16. A pipe coupling bush (30) as claimed in any one of claims 13 to 15 wherein the second strip (32), third strip (33) and second hinge portion (35) each share a substantially continuous surface (37) comprising either: the third (303) and fifth (305) surfaces; or the fourth (304) and sixth (306) surfaces.

17. A pipe coupling bush (30) as claimed in claim 16 when dependent either directly or indirectly upon claim 6 wherein the substantially continuous surface (36) shared by the first strip (31), second strip (32) and hinge portion (34) is disposed on the opposite surface of the bush to the substantially continuous surface (37) shared by the second strip (32), third strip (33) and second hinge portion (35).

18. A method of manufacturing a pipe coupling bush (10, 30) as claimed in any one of claims 1 to 17, the method comprising the steps of: providing an extrusion profile; extruding a resiliently deformable material through said profile; and cutting the extruded material to a required or desired length.

19. A method as claimed in claim 19 wherein the method incorporates the additional step of connecting the ends of the extruded material to form an annular bush and wherein the ends are connected by any one or more of: adhesives, connecting components, connecting mouldings, heat welding, chemical welding, pressure welding injection moulding or vulcanisation.

## Patentansprüche

1. Rohrverbindungsmuffe (10, 30), umfassend einen ersten Abschnitt (11, 31), welcher eine erste Dicke (11a, 31a) aufweist und eine erste (111, 301) und eine zweite (112, 302) Kontaktfläche umfasst, die geeignet sind, in Kontakt mit der Außenfläche eines Rohrs zu treten, einen zweiten Abschnitt (12, 32), welcher eine zweite unterschiedliche Dicke (12a, 32a) aufweist und eine dritte (123, 303) und eine vierte (124, 304) Kontaktfläche umfasst, die geeignet sind, in Kontakt mit der Außenfläche eines Rohrs zu treten, sowie einen dünnen klappbaren Gelenkabschnitt (13, 34), welcher zwischen dem ersten Abschnitt (11, 31) und dem zweiten Abschnitt (12, 32) vorgesehen ist,
wobei der erste (11, 31) und der zweite Abschnitt (12, 32) in der Lage sind, sich relativ zueinander um den Gelenkabschnitt (13, 34) zwischen wenigstens einer ersten Stellung, in der die erste (111, 301) und die dritte (123, 303) Fläche beide in Kontakt mit der Außenfläche eines Rohrs treten können, und einer zweiten Stellung zu bewegen, in der die erste (111, 301) und die dritte (123, 303) Fläche in Kontakt miteinander stehen und entweder die zweite (112, 302) oder die vierte (124, 304) Fläche in Kontakt mit der Außenfläche eines Rohrs treten kann.

2. Rohrverbindungsmuffe (10, 30) nach Anspruch 1, wobei die Muffe (10, 30) aus einem Elastomer oder einem anderen elastisch verformbaren Material gebildet ist.

3. Rohrverbindungsmuffe (10, 30) nach Anspruch 1 oder Anspruch 2, wobei es sich bei der ersten (111, 301), der zweiten (112, 302), der dritten (123, 303) und der vierten (124, 304) Fläche im Wesentlichen um flache, regelmäßig gestaltete oder unregelmäßige Flächen handelt.

4. Rohrverbindungsmuffe (10, 30) nach einem der vorhergehenden Ansprüche, wobei der klappbare Gelenkabschnitt (13, 34) einen dünnen Verbindungssteg zwischen dem ersten (11, 31) und dem zweiten (12, 32) Abschnitt umfasst, der in Bezug auf den ersten (11, 31) und den zweiten (12, 32) Abschnitt schmal ist.

5. Rohrverbindungsmuffe (13, 30) nach einem der vorhergehenden Ansprüche, wobei der erste Abschnitt (11, 31), der zweite Abschnitt (12, 32) und der Gelenkabschnitt (13, 34) einstückig ausgebildet sind und wobei der erste Abschnitt (11, 31), der zweite Abschnitt (12, 32) und der Gelenkabschnitt (13, 34) entweder als konstante Profilextrusion oder in einer geeigneten Gussform ausgebildet sind.

6. Rohrverbindungsmuffe (10, 30) nach einem der vorhergehenden Ansprüche, wobei der erste Abschnitt (11, 31), der zweite Abschnitt (12, 32) und der Gelenkabschnitt (13, 34) jeweils Anteil an einer im Wesentlichen durchgehenden Fläche (14, 36) haben, die die erste (111, 301) und die dritte (123, 303) Fläche umfasst.

7. Rohrverbindungsmuffe (10, 30) nach einem der vorhergehenden Ansprüche, wobei der klappbare Gelenkabschnitt (13, 34) dazu ausgebildet ist, eine Dicke zu haben, die ein im Wesentlichen 180 Grad betragendes Abwinkeln zwischen dem ersten Abschnitt (11, 31) und dem zweiten Abschnitt (12, 32) ermöglicht, ohne dass die konstruktive Integrität im umgeklappten Zustand verloren geht.

8. Rohrverbindungsmuffe (10, 30) nach einem der vorhergehenden Ansprüche, wobei das Verhältnis der ersten Dicke (11a, 31 a) zu der zweiten Dicke (12a, 32a) ungefähr in der Größenordnung von 1:2 liegt.

9. Rohrverbindungsmuffe (10, 30) nach einem der vorhergehenden Ansprüche, wobei die Muffe (10, 30) in einer länglichen linearen Form vorgesehen ist, um auf eine gewünschte Länge gekürzt zu werden.

10. Rohrverbindungsmuffe (10, 30) nach einem der vorhergehenden Ansprüche, wobei die Muffe (10, 30) in Form eines Rings vorgesehen ist und wobei entweder die Muffe (10, 30) direkt in die Ringform geformt ist oder die beiden Enden einer länglichen linearen Muffe miteinander verbunden sind, um die Ringform mittels eines oder mehrerer der folgenden Materialien oder Verfahren bereitzustellen: Klebstoffe, Verbindungsteile, Verbindungsformteile, Warmschweißen, chemisches Schweißen, Druckschweißen, Spritzgießen oder Vulkanisieren.

11. Rohrverbindungsmuffe (10, 30) nach Anspruch 10 bei direkter oder indirekter Abhängigkeit von Anspruch 6, wobei die im Wesentlichen durchgehende Fläche (14, 36) die innere Fläche des Rings bildet.

12. Rohrverbindungsmuffe (10, 30) nach einem der vorhergehenden Ansprüche, wobei die Muffe zusätzliche Abschnitte umfasst, die über zusätzliche dünne klappbare Gelenkabschnitte verbunden sind.

13. Rohrverbindungsmuffe (30) nach Anspruch 12, wobei die Muffe (30) ferner einen dritten Abschnitt (33) umfasst, welcher eine dritte Dicke (33a) aufweist und eine fünfte (305) und eine sechste (306) Kontaktfläche umfasst, die geeignet sind, in Kontakt mit der Außenfläche eines Rohrs zu treten, wobei der dritte Abschnitt (33) über einen zweiten dünnen klappbaren Gelenkabschnitt (35) mit dem zweiten Abschnitt (32) verbunden ist und wobei der zweite (32) und der dritte (33) Abschnitt in der Lage sind, sich relativ zueinander um den zweiten Gelenkabschnitt (35) zwischen wenigstens einer ersten Stellung, in der sowohl eine der Kontaktflächen des zweiten Abschnitts (32) als auch eine der Kontaktflächen des dritten Abschnitts (33) in Kontakt mit der Außenfläche eines Rohrs treten können, und einer zweiten Stellung zu bewegen, in der entweder die vierte (304) und die sechste (306) Fläche in Kontakt miteinander stehen oder die dritte (303) und die fünfte (305) Fläche in Kontakt miteinander stehen.

14. Rohrverbindungsmuffe (30) nach Anspruch 13, wobei die dritte Dicke (33a) sich im Wesentlichen von der ersten Dicke (31 a), der zweiten Dicke (32a) und der Summe aus der ersten und der zweiten Dicke unterscheidet.

15. Rohrverbindungsmuffe (30) nach Anspruch 13 oder Anspruch 14, wobei der dritte Abschnitt (33) und der zweite Gelenkabschnitt (35) einstückig mit dem ersten Abschnitt (31), dem zweiten Abschnitt (32) und dem Gelenkabschnitt (34) ausgebildet sind und wobei der erste Abschnitt (31), der zweite Abschnitt (32), der dritte Abschnitt (33), der Gelenkabschnitt (34) und der zweite Gelenkabschnitt (35) entweder als konstante Profilextrusion oder in einer geeigneten Gussform ausgebildet sind.

16. Rohrverbindungsmuffe (30) nach einem der Ansprüche 13 bis 15, wobei der zweite Abschnitt (32), der dritte Abschnitt (33) und der zweite Gelenkabschnitt (35) jeweils Anteil an einer im Wesentlichen durchgehenden Fläche (37) haben, die entweder die dritte (303) und die fünfte (305) Fläche oder die vierte (304) und die sechste (306) Fläche umfasst.

17. Rohrverbindungsmuffe (30) nach Anspruch 16 bei entweder direkter oder indirekter Abhängigkeit von Anspruch 6, wobei die im Wesentlichen durchgehende Fläche (36), an der der erste Abschnitt (31), der zweite Abschnitt (32) und der Gelenkabschnitt (34) Anteil haben, auf der Fläche der Muffe angeordnet ist, die der im Wesentlichen durchgehenden Fläche (37) gegenüberliegt, an der der zweite Abschnitt (32), der dritte Abschnitt (33) und der zweite Gelenkabschnitt (35) Anteil haben.

18. Verfahren für die Herstellung einer Rohrverbindungsmuffe (10, 30) nach einem der Ansprüche 1 bis 17, wobei das Verfahren folgende Schritte umfasst: Vorsehen eines Extrusionsprofils, Extrudieren eines elastisch verformbaren Materials durch das Profil und Kürzen des extrudierten Materials auf eine erforderliche oder gewünschte Länge.

19. Verfahren nach Anspruch 19, wobei das Verfahren den zusätzlichen Schritt des Verbindens der Enden des extrudierten Materials enthält, um eine ringförmige Muffe auszubilden, und wobei die Enden mittels eines oder mehrerer der folgenden Materialien oder Verfahren verbunden sind: Klebstoffe, Verbindungsteile, Verbindungsformteile, Warmschweißen, chemisches Schweißen, Druckschweißen, Spritzgießen oder Vulkanisieren.

## Revendications

1. Manchon d'accouplement pour tuyau (10, 30) comprenant :
une première bande (11, 31) présentant une première épaisseur (11a, 31a) et comprenant des première (111, 301) et deuxième (112, 302) surfaces de contact qui sont appropriées à l'établissement d'un contact avec la surface extérieure d'un tuyau ;
une deuxième bande (12, 32) présentant une deuxième épaisseur différente (12a, 32a) et comprenant des troisième (123, 303) et quatrième (124, 304) surfaces de contact qui sont appropriées à l'établissement d'un contact avec la surface extérieure d'un tuyau ; et
une partie de charnière (13, 34) pliable mince disposée entre la première bande (11, 31) et la deuxième bande (12, 32), dans lequel les première (11, 31) et deuxième (12, 32) bandes sont fonctionnelles pour se déplacer l'une par rapport à l'autre autour de la partie de charnière (13, 34) entre au moins :
une première position dans laquelle les première (111, 301) et troisième (123, 303) surfaces peuvent toutes les deux établir un contact avec la surface extérieure d'un tuyau ; et
une seconde position dans laquelle les première (111, 301) et troisième (123, 303) surfaces sont en contact l'une avec l'autre, et soit la deuxième surface (112, 302) soit la quatrième surface (124, 304) peut établir un contact avec la surface extérieure d'un tuyau.

2. Manchon d'accouplement pour tuyau (10, 30) selon la revendication 1, dans lequel le manchon (10, 30) est réalisé à partir d'un élastomère ou de tout autre matériau élastiquement déformable.

3. Manchon d'accouplement pour tuyau (10, 30) selon la revendication 1 ou la revendication 2, dans lequel les première (111, 301), deuxième (112, 302), troisième (123, 303) et quatrième (124, 304) surfaces sont des surfaces sensiblement plates, irrégulières ou modelées régulières.

4. Manchon d'accouplement pour tuyau (10, 30) selon l'une quelconque des revendications précédentes, dans lequel la partie de charnière (13, 34) pliable comprend une entretoise de connexion mince située entre les première (11, 31) et deuxième (12, 32) bandes, qui est étroite par rapport au première (11, 31) et deuxième (12, 32) bandes.

5. Manchon d'accouplement pour tuyau (10, 30) selon l'une quelconque des revendications précédentes, dans lequel la première bande (11, 31), la deuxième bande (12, 32) et la partie de charnière (13, 34) sont formées de manière solidaire, et dans lequel la première bande (11, 31), la deuxième (12, 32) et la partie de charnière (13, 34) sont formées : soit sous la forme d'une extrusion de profilé constante ; soit dans un moule approprié.

6. Manchon d'accouplement pour tuyau (10, 30) selon l'une quelconque des revendications précédentes, dans lequel la première bande (11, 31), la deuxième bande (12, 32) et la partie de charnière (13, 34) partagent chacune une surface sensiblement continue (14, 36) comprenant les première (111, 301) et troisième (123, 303) surfaces.

7. Manchon d'accouplement pour tuyau (10, 30) selon l'une quelconque des revendications précédentes, dans lequel la partie de charnière (13, 34) pliable est adaptée pour présenter une épaisseur qui facilite un pliage à sensiblement 180° entre la première bande (11, 31) et la deuxième bande (12, 32) sans perdre son intégrité structurale une fois qu'elle a été pliée.

8. Manchon d'accouplement pour tuyau (10, 30) selon l'une quelconque des revendications précédentes, dans lequel le rapport de la première épaisseur (11a, 31a) sur la deuxième épaisseur (12a, 32a) est de l'ordre de 1:2 environ.

9. Manchon d'accouplement pour tuyau (10, 30) selon l'une quelconque des revendications précédentes, dans lequel le manchon (10, 30) est fourni sous une forme linéaire allongée à couper à la longueur souhaitée.

10. Manchon d'accouplement pour tuyau (10, 30) selon l'une quelconque des revendications précédentes, dans lequel le manchon (10, 30) est fourni sous une forme annulaire et dans lequel : le manchon (10, 30) est moulé directement avec la forme annulaire ; ou les deux extrémités d'un manchon linéaire allongé sont reliées ensemble pour fournir la forme annulaire en faisant appel à un ou plusieurs parmi : des adhésifs, des composants de liaison, des moulages de liaison, un thermosoudage, un soudage chimique, un soudage par pression, un moulage par injection ou une vulcanisation.

11. Manchon d'accouplement pour tuyau (10, 30) selon la revendication 10, quand elle dépend directement ou indirectement de la revendication 6, dans lequel la surface sensiblement continue (14, 36) forme la surface intérieure de l'espace annulaire.

12. Manchon d'accouplement pour tuyau (10, 30) selon l'une quelconque des revendications précédentes, dans lequel le manchon comprend des bandes supplémentaires reliées via des parties de charnière pliables minces supplémentaires.

13. Manchon d'accouplement pour tuyau (30) selon la revendication 12, dans lequel le manchon (30) comprend en outre :
une troisième bande (33) présentant une troisième épaisseur (33a) et comprenant des cinquième (305) et sixième (306) surfaces de contact qui sont appropriées à l'établissement d'un contact avec la surface extérieure d'un tuyau, dans lequel la troisième bande (33) est reliée à la deuxième bande (32) via une seconde partie de charnière (35) pliable mince, et dans lequel les deuxième (32) et troisième (33) bandes sont fonctionnelles pour se déplacer l'une par rapport à l'autre autour de la seconde partie de charnière (35) entre au moins :
une première position dans laquelle chacune l'une des surfaces de contact de la deuxième bande (32) et l'une des surfaces de contact de la troisième bande (33) peuvent établir un contact avec la surface extérieure d'un tuyau ; et
une seconde position dans laquelle soit les quatrième (304) et sixième (306) surfaces sont en contact l'une avec l'autre, soit les troisième (303) et cinquième (305) surfaces sont en contact l'une avec l'autre.

14. Manchon d'accouplement pour tuyau (30) selon la revendication 13, dans lequel la troisième épaisseur (33a) est sensiblement différente de :
la première épaisseur (31a), la deuxième épaisseur (32a) et la somme des première et deuxième épaisseurs.

15. Manchon d'accouplement pour tuyau (30) selon la revendication 13 ou la revendication 14, dans lequel la troisième bande (33) et la seconde partie de charnière (35) sont formées de manière solidaire avec la première bande (31), la deuxième bande (32) et la partie de charnière (34), et dans lequel la première bande (31), la deuxième bande (32), la troisième bande (33), la partie de charnière (34) et la seconde partie de charnière (35) sont formées : soit sous la forme d'une extrusion de profilé constante ; soit dans un moule approprié.

16. Manchon d'accouplement pour tuyau (30) selon l'une quelconque des revendications 13 à 15, dans lequel la deuxième bande (32), la troisième bande (33) et la seconde partie de charnière (35) partagent chacune une surface sensiblement continue (37) comprenant : soit les troisième (303) et cinquième (305) surfaces ; soit les quatrième (304) et sixième (306) surfaces.

17. Manchon d'accouplement pour tuyau (30) selon la revendication 16, quand elle dépend directement ou indirectement de la revendication 6, dans lequel la surface sensiblement continue (36) partagée par la première bande (31), la deuxième bande (32) et la partie de charnière (34) est disposée sur la surface du manchon opposée à la surface sensiblement continue (37) partagée par la deuxième bande (32), la troisième bande (33) et la seconde partie de charnière (35).

18. Procédé de fabrication du manchon d'accouplement pour tuyau (10, 30) selon l'une quelconque des revendications 1 à 17, le procédé comprenant les étapes consistant à : fournir un profil extrudé ; extruder un matériau élastiquement déformable à travers ledit profil ; et couper le matériau extrudé à une longueur requise ou souhaitée.

19. Procédé selon la revendication 19, dans lequel le procédé incorpore l'étape supplémentaire consistant à relier les extrémités du matériau extrudé afin de former un manchon annulaire, et dans lequel les extrémités sont reliées en faisant appel à un ou plusieurs parmi : des adhésifs, des composants de liaison, des moulages de liaison, un thermosoudage, un soudage chimique, un soudage par pression, un moulage par injection ou une vulcanisation.
